# EUROPEAN PATENT APPLICATION

(11) **EP 1 998 324 A1**
(43) Date of publication of application: **03.12.2008**
(21) Application number: 07109123.5
(22) Date of filing: 29.05.2007
(51) Int. Cl.: G11B 7/0065

(54) **Reflection type collinear holographic storage system**

(71) Applicant: Deutsche Thomson OHG, 30625 Hannover (DE)
(72) Inventor: Knittel, Joachim, 78532, Tuttlingen (DE); Hossfeld, Wolfgang, 78050, Villingen-Schwenningen (DE); Przygodda, Frank, 78050, Villlingen-Schwenningen (DE)
(74) Representative: Schmidt-Uhlig, Thomas

(57) **Abstract**

The present invention relates to a holographic storage system (1), and more specifically to a simplified reflection type collinear holographic storage system with an efficient generation of an object beam (15).

According to the invention, in a collinear holographic storage system (1) a spatial light modulator (14, 22) is located in the beam path of a portion (10) of a reference beam (2) transmitted through a holographic storage medium (9) in such way that it is adapted to generate the object beam (15) by imprinting a data page onto the transmitted reference beam (10).

## Description

The present invention relates to a holographic storage system, and more specifically to a simplified reflection type collinear holographic storage system with an efficient generation of an object beam.

In holographic data storage digital data are stored by recording the interference pattern produced by the superposition of two coherent laser beams, where one beam, the so-called 'object beam', is modulated by a spatial light modulator and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recording. This results in the reconstruction of the recorded object beam.

One advantage of holographic data storage is an increased data capacity. Contrary to conventional optical storage media, the volume of the holographic storage medium is used for storing information, not just a few layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. This allows to achieve increased data rates in addition to the increased storage density. The data page is imprinted onto the object beam by the spatial light modulator (SLM) and detected with a detector array. Straightforward examples of an SLM are an amplitude SLM, where the pixels with the value '0' block the light, and the pixels with the value '1' transmit or reflect it, and a phase SLM, where the information bits '0' and '1' (or vice versa) are expressed by a phase shift of '0' and 'π', respectively.

In "Reflection-type holographic disk memory with random phase shift multiplexing", Appl. Opt., Vol. 45 (2006), pp. 3270, Matoba et al. propose a reflection type holographic storage system. In reflection type holographic storage systems a hologram is created by the interference pattern between counter propagating beams. Matoba et al. use an object beam and a reference beam with orthogonal linear polarization states. The two beams are combined by a polarization beam splitter and then propagate in parallel. Parts of both beams are transmitted through a recording medium after focusing by an objective lens. The transmitted beams are reflected by a mirror and their polarization states are rotated by 90° by passing twice through a quarter wave plate. Inside the recording medium an interference pattern is generated by the forward-propagating object beam and the reflected reference beam.

It is an object of the invention to propose a simplified reflection type holographic storage system.

According to the invention, this object is achieved by a collinear holographic storage system with a spatial light modulator for imprinting a data page on an object beam, wherein the spatial light modulator is located in the beam path of a portion of a reference beam transmitted through a holographic storage medium and generates the object beam by imprinting a data page onto the transmitted reference beam.

Similarly, a method for collinear holographic data storage has the steps of:
- illuminating a reference beam onto a holographic storage medium;
- imprinting a data page onto a portion of the reference beam transmitted through the holographic storage medium for obtaining an object beam;
- illuminating the object beam onto the holographic storage medium; and
- generating a hologram in the holographic storage medium by interference between the reference beam and the object beam.

The generation of the object beam using the transmitted reference beam has the advantage that the available laser power is used very efficiently. As the same light beam is used for the reference beam and the object beam, the required laser power is reduced by a factor of nearly two. In addition, the collinear setup and the relatively simple optics allow a compact and cost-efficient system.

Advantageously, the spatial light modulator reflects the object beam back towards the holographic storage medium. In this way the reference beam and the object beam overlap perfectly in the Fourier plane of the objective lenses, where the holographic storage medium is located. Therefore, the holographic material is used very efficiently, which leads to an increased data capacity. The reflection of the object beam is preferably achieved by using a reflective polarization influencing spatial light modulator, e.g. in combination with a polarization beam splitter, or by a spatial light modulator whose pixels are switchable between a reflective and a transmissive or absorptive state. Amplitude and/or phase influencing spatial light modulators are likewise applicable. Alternatively, a digital mirror device is used. In the latter case the spatial light modulator is advantageously inclined relative to an optical axis. All the above solutions allow to easily direct the light of the switched-off pixels of the data page out of the beam path of the object beam.

Preferably, a phase mask is located in conjugate planes of the spatial light modulator and an array detector in a 4f-system. The phase plate is advantageously used for multiplexing. In addition, it eliminates the Fourier peak, which leads to higher data capacities. The placement of the phase mask in the conjugate planes of the spatial light modulator and the array detector makes the readout of a hologram through the phase plate possible. This leads to a compact system.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: schematically depicts a reflection type collinear holographic storage system according to the invention during recording,
- Fig. 2: depicts the holographic storage system of Fig. 1 during reading, and
- Fig. 3: shows an alternative setup of the holographic storage system according to the invention.

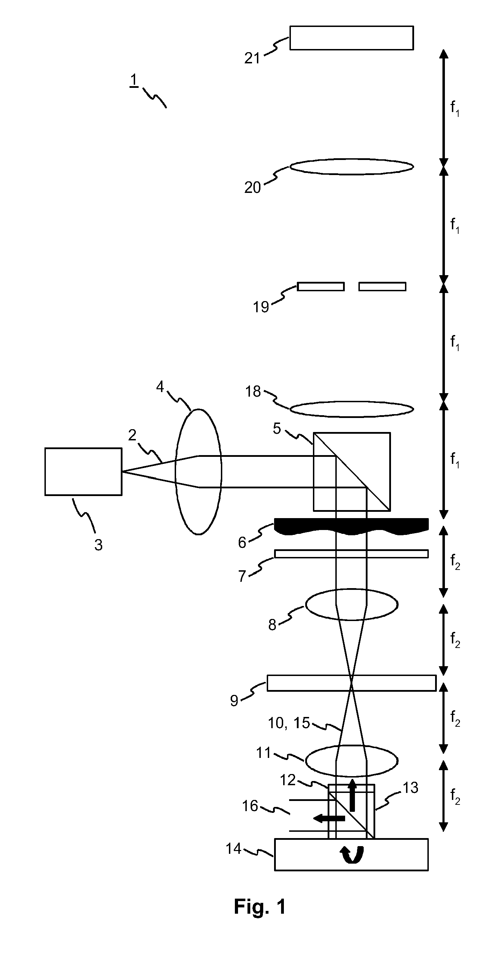

Fig. 1 schematically depicts a reflection type collinear holographic storage system 1 according to the invention during recording. A laser beam 2 emitted by laser 3 and collimated by a lens 4 is deviated by a polarizing beam splitter 5 towards a diffractive optical element (DOE) 6 and a quarter-wave plate 7. An objective lens 8 focuses the beam into a holographic storage medium 9. A transmitted beam 10 is collimated by a further objective lens 11 and sent through a quarter-wave plate 12 and a polarizing beam splitter 13 onto a reflective spatial light modulator (SLM) 14. The reflective spatial light modulator (SLM) 14 reflects part of the incident light beam 10 back towards the holographic storage medium 9.

The DOE 6 is preferably a phase plate, a diffuser or an electrically switchable phase SLM. In the latter case the size of the pixels of the phase SLM is preferably similar to the pixel size of the SLM 14. By moving or switching the DOE 6, speckle multiplexing or phase multiplexing is possible. Alternatively, shift multiplexing or a combination of the above multiplexing methods is used. The DOE 6 prevents the occurrence of a hot spot in the holographic storage medium 9, which is typical for Fourier holograms. As the DOE 6 is a pure phase element and the reflective SLM 14 is situated in a conjugate plane of a 4f imaging system formed by the objective lenses 8 and 11, the intensity distribution on the reflective SLM 14 is similar to the intensity distribution at the DOE 6. The absorption within the holographic storage medium 9 causes only a slight reduction of the absolute intensity.

The light beam 2 that goes from the DOE 6 towards the holographic storage medium 9 is the reference beam, whereas the light beam 15 reflected by the reflective SLM 14 towards the holographic storage medium 9 is the object beam. The reflective SLM 14 is used to imprint the data onto the wave front of the object beam 15. The two beams 2, 15 interfere within the holographic storage medium 9 and create a hologram. The polarizing beam splitter 13 is used to direct the light 16 of the 'switched-off' pixels out of the holographic storage system 1. At this point it is to be noted that the reflective SLM 14 reflects linear polarized light. The polarization direction is controlled by the reflective SLM 14. The quarter-wave plate 12 is used to transform the transmitted linear polarized light into circular polarized light or vice versa.

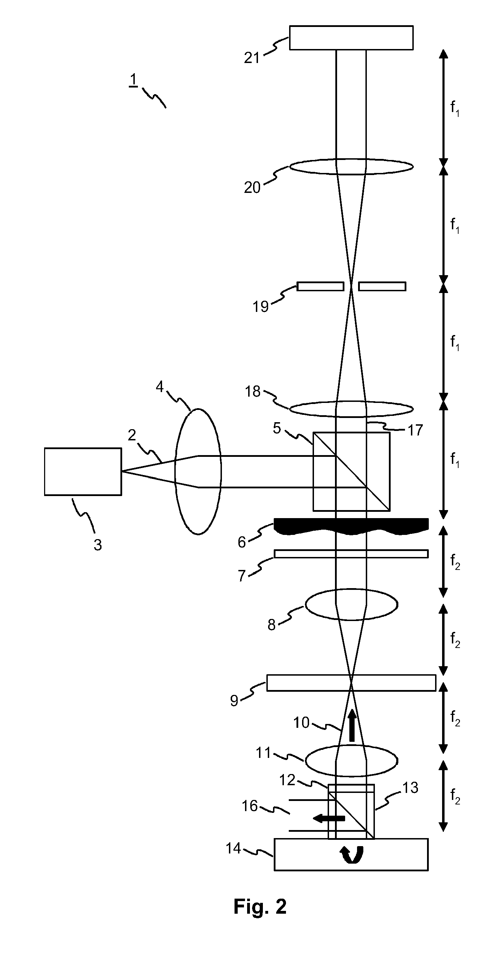

As can be seen in Fig. 2, for readout the reflective SLM 14 is switched in such a way that no light coming from laser 3 is reflected towards the holographic storage medium 9. Instead, the light 16 exits via the polarizing beam-splitter 13. The holographic storage medium 9 is illuminated by the light beam 2 emitted by the laser 3 via the objective lens 8. The hologram recorded in the holographic storage medium 9 reflects part 17 of the incident light beam 2, which corresponds to the stored data page. On the return path towards an array detector 21 the light beam 17 has to pass through the DOE 6. As before, the DOE 6 and the array detector 21 are situated in a conjugate plane of a 4f imaging system formed by two lenses 18 and 20. Therefore, the intensity distribution on the array detector 21 is similar to the one at the DOE 6. Consequently, the DOE 6 has no influence on the data, as the array detector 21 detects only the intensity. Optionally, a Fourier filter 19 is introduced to cancel high-frequency components generated by the DOE 6. This is especially useful if the DOE 6 is a phase plate consisting of individual pixels. Furthermore, the polarizing beam splitter 13 may be replaced by a thin film polarizer, which transmits only linear polarized light.

For a read-only system the second objective lens 11, the quarter-wave plate 12, the polarizing beam splitter 13 and the reflective SLM 14 are not needed. Therefore, a read-only system is realized in a very simple way.

Instead of the reflective SLM 14, which controls the polarization direction of the reflected light, an SLM whose pixels can be switched between a reflective state and a transmissive or absorptive state can likewise be used. This further simplifies the optical setup as it is no longer necessary to remove the light of the 'switched-off' pixels from the optical path with additional optical components. Furthermore, the reflective SLM 14 can also be replaced by a transmissive polarization influencing SLM. In this case a mirror located behind the SLM is used for reflecting the object beam 15 towards the holographic storage medium 9.

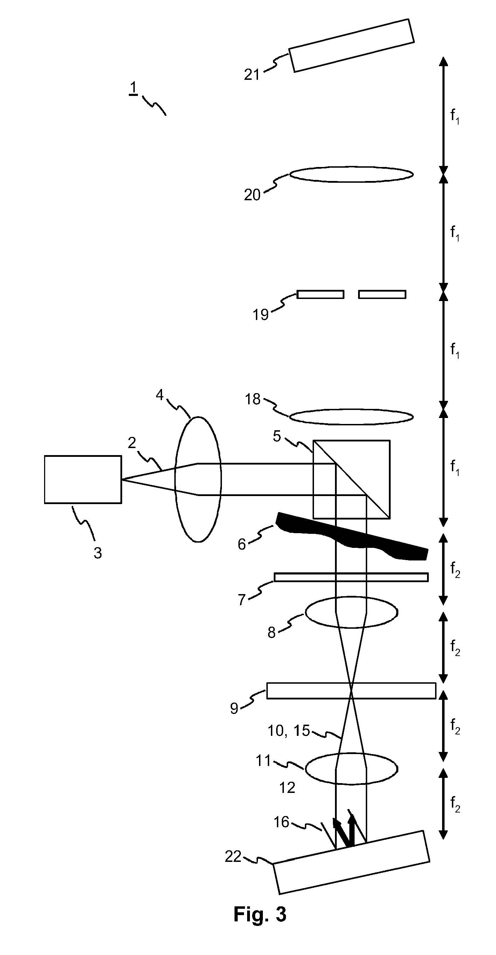

An alternative setup of the holographic storage system 1 according to the invention is shown in Fig. 3. A digital mirror device (DMD) 22 is used as the reflective SLM 14. In this case the beam polarizing splitter 13 and the quarter-wave plate 12 are not needed. Typically the DMD 22 has to be rotated by an angle of about 12° relative to the optical axis in order to retro-reflect an incident beam. In order to ensure that the surfaces of the DOE 6, the array detector 21 and the DMD 22 are placed in conjugate planes of the 4f systems, the DOE 6 and the array detector 21 are tilted by the same amount, as shown in the figure. In this way the optical path lengths are kept constant for all pixels.

## Claims

1. Collinear holographic storage system (1) with a spatial light modulator (14, 22) for imprinting a data page on an object beam (15), **characterized in that** the spatial light modulator (14, 22) is located in the beam path of a portion (10) of a reference beam (2) transmitted through a holographic storage medium (9) and generates the object beam (15) by imprinting a data page onto the transmitted reference beam (10).

2. Collinear holographic storage system (1) according to claim 1, **wherein** the spatial light modulator (14, 22) reflects the object beam (15) towards the holographic storage medium (9).

3. Collinear holographic storage system (1) according to claim 1 or 2, wherein the spatial light modulator (14) is a polarization, amplitude and/or phase influencing spatial light modulator.

4. Collinear holographic storage system (1) according to claim 3, **wherein** a polarization beam splitter (13) is located before the spatial light modulator (14).

5. Collinear holographic storage system (1) according to claim 1 or 2, **wherein** the spatial light modulator (14, 22) is a digital mirror device or has pixels which are switchable between a reflective and a transmissive or absorptive state.

6. Collinear holographic storage system (1) according to one of the preceding claims, **wherein** the spatial light modulator (14, 22) is inclined relative to an optical axis.

7. Collinear holographic storage system (1) according to one of the preceding claims, **wherein** a phase mask (6) is located in conjugate planes of the spatial light modulator (14, 22) and an array detector (21) in a 4f-system.

8. Collinear holographic storage system (1) according to claim 7, **wherein** the phase mask (6) has pixels whose size is similar to the size of the pixels of the spatial light modulator (14).

9. Method for collinear holographic data storage, **having** the steps of:
- illuminating a reference beam (2) onto a holographic storage medium (9);
- imprinting a data page onto a portion (10) of the reference beam (2) transmitted through the holographic storage medium (9) for obtaining an object beam (15);
- illuminating the object beam (15) onto the holographic storage medium (9); and
- generating a hologram in the holographic storage medium (9) by interference between the reference beam (2) and the object beam (15).

10. Method according to claim 9, **wherein** said step of imprinting the data page onto the portion (10) of the reference beam (2) is performed by a polarization influencing spatial light modulator (14).

11. Method according to claim 10, **further** having the step of removing light of switched-off pixels of the data page with a polarization beam splitter (13).

12. Method according to claim 9, **wherein** said step of imprinting the data page onto the portion (10) of the reference beam (2) is performed by a digital mirror device (22) or by a spatial light modulator (14) having pixels which are switchable between a reflective and a transmissive or absorptive state.

13. Method according to one of claims 9 to 12, **wherein** the spatial light modulator (14, 22) is inclined relative to an optical axis.

14. Method according to one of the claims 9 to 13, **wherein** a phase mask (6) is located in conjugate planes of the spatial light modulator (14, 22) and an array detector (21) in a 4f-system.

15. Method according to claim 14, **wherein** the phase mask (6) has pixels whose size is similar to the size of the pixels of the spatial light modulator (14).
